# EUROPEAN PATENT SPECIFICATION

(11) **EP 3 063 815 B1**
(45) Date of publication and mention of the grant of the patent: **19.02.2020**
(21) Application number: 14802821.0
(22) Date of filing: 29.10.2014
(51) Int. Cl.: H01M 8/04007, C25B 1/02, H01M 8/06, H01M 16/00, H01M 8/18, H01M 8/124, C25B 1/00, H01M 8/0432, H01M 8/0656

(54) **POWER GENERATION SYSTEM**
ENERGIEERZEUGUNGSSYSTEM
SYSTÈME DE PRODUCTION D'ÉNERGIE

(30) Priority: 29.10.2013 EP 13290261
(43) Date of publication of application: 07.09.2016
(73) Proprietor: Total Marketing Services, 92800 Puteaux (FR)
(72) Inventor: CURIEN, Jean-Baptiste, F-88340 Le Val d'Ajol (FR); KRESSMANN, Stéphane, F-69360 Communay (FR)
(74) Representative: Croonenbroek, Thomas Jakob
(86) International application number: PCT/EP2014/073248
(87) International publication number: WO 2015/063170

(56) References cited:
- EP-A1- 1 892 493
- US-A1- 2003 134 161
- US-A1- 2004 081 859
- US-A1- 2006 222 912
- US-A1- 2009 025 315
- US-A1- 2010 167 147
- US-A1- 2010 314 235
- US-A1- 2011 081 586
- US-A1- 2012 208 100
- "PEM electrolysis for production of hydrogen from renewable energy sources", FRANC BARBIR, SOLAR ENERGY, vol. 78, 2005, pages 661-669, XP027840501, cited in the application

## Description

### FIELD OF THE INVENTION

The invention relates to a power generation system in particular for enhancing power harvesting from renewable energy sources.

### BACKGROUND AND PRIOR ART

Renewable energy sources like solar panels or other intermittent renewable sources are now widely used for generation of electricity. In general, the power generated by these energy sources is not used directly by the user who has installed these renewable energy sources, but is supplied to the public grid. This solves directly the problem that once the electric power is generated, it must be consumed instantly.

However, intermittency of renewable energy sources is a great challenge not only for isolated sites, but also for grid operators where high variations in energy generation can cause problems on the public grid management.

For instance, isolated sites, which are not connected to a public grid, the electrical energy harvested in excess is in general stored in a battery in order to have electrical energy at disposal when the renewable energy source does not work, for example in the night for solar panels or when wind is not blowing for wind mills.

The problem however is that the energy that may be stored is quite limited unless one uses very big and heavy batteries which are quite expensive.

In addition, when dimensioning a power generating system for an isolated site located on a place on earth with pronounced seasons, batteries exhibit quite difficulties to store electrical energy over a long time and there are also problems for having cost-effective batteries.

For these long term cycles, it has been proposed to convert electrical energy in excess into another energy source, in particular to convert electrical energy via electrolysis into hydrogen and to store the hydrogen for periods where the renewable power sources are less available. When necessary, the hydrogen is reconverted into electricity through a fuel cell.

Such a system is for example discussed in the article "PEM electrolysis for production of hydrogen from renewable energy sources", Frano Barbir, Solar Energy 78 (2005) 661-669.

However, at every power conversion, one has to face conversion losses that may put at question the overall system.

US2012/208100 relates to an electrical power storage system using hydrogen and a method for storing electrical power using hydrogen.

US2006/0222912 relates to a modular regenerative fuel cell system.

US2004/0081859 relates to a solid oxide regenerative fuel cell.

US2010/0167147 relates to a reversible fuel cell. The fuel cells of this document are surrounded by thermally insulating material and a heat regulator in order to reach and remain at their optimum operating temperatures. The heat regulator contains conventional wire wound electrical heat elements, conduits for circulation of heating and/or cooling material or by other heating and/or cooling means known in the art. Thus, the reversible fuel cell of this document exhibits an active regulator that would need to be controlled in order to bring the fuel cells at optimum temperature.

The present invention focusses on improving the overall energy outcome for a system as described above, in particular by stepping aside or reducing active temperature control of the reversible fuel cell.

For this purpose, the invention proposes a power generation system according to the attatched claims and comprising:
- at least one renewable energy source,
- a reversible fuel cell module exhibiting a electrolysis functioning mode where the fuel cell module is powered by the renewable energy source for generation of a combustible gas and a fuel cell functioning mode where the fuel cell module generates electricity from a combustible gas,
- a high temperature heat storage coupled to said reversible fuel cell module for maintaining the reversible fuel cell module in a operation temperature range in the electrolysis functioning mode,
- a combustible gas storage coupled to the reversible fuel cell module for storing the combustible gas generated by the reversible fuel cell module in the electrolysis functioning mode and for supplying the combustible gas to the reversible fuel cell module in the fuel cell function mode, where the reversible fuel cell module is encapsulated by the high temperature heat storage.

Thanks to the encapsulation, no active electric heat management is necessary in order to ensure optimal functioning conditions of the reversible fuel cell.

According to one aspect said reversible fuel cell module comprises a reversible fuel cell, in particular a reversible solid oxide fuel cell SOFC.

According to another aspect, reversible fuel cell module comprises at least a first fuel cell generating a combustible gas and a second fuel cell generating electricity from a combustible gas.

The high temperature heat storage comprises a heat exchanger having salts as heat exchange medium that are in a molten state in the operation temperature range of the reversible fuel cell module.

According to a further development, there is foreseen a secondary heat exchanger coupled on the one side to the high temperature heat storage and on the other side to at least one domestic heat consumer module.

The domestic heat consumer module comprises for example the hot water circuit or hot water storage capacities of a building.

According to a further aspect, the power generation system comprises a temperature sensor and a coupling actuator between the high temperature heat storage and the secondary heat exchanger which is activated upon a signal from the temperature sensor in order to activate the secondary heat exchanger at a predetermined temperature within or above the operation temperature range of the reversible fuel cell module.

The renewable energy source may comprise a photovoltaic panel. According to another aspect, the power generation system comprises for example a battery for storing electricity produced by the renewable energy source and a switching module for powering the reversible fuel cell module in the electrolysis functioning mode once a predefined load level of the battery has been reached.

In order to extend autonomy, the reversible fuel cell module may in addition be coupled to a natural gas distribution supply.

The invention also relates to a building comprising a power generation system as described above, where the secondary heat exchanger is coupled to a heating system of the building.

### BRIEF DESCRIPTIONS OF THE DRAWINGS

Other advantages and characteristics will appear with the reading of the description of the following figures, among which:
- FIG. 1 is a schematic functional representation of an embodiment of a power generation system according to the invention,
- FIG. 2 is a more detailed and structural schematic of the embodiment of the power generation system of figure 1.
- FIG. 3 is a more detailed and structural schematic of a variant of the embodiment of the power generation system of figure 2.

### DETAILED DESCRIPTION

On all the figures the same references refer to the same elements.

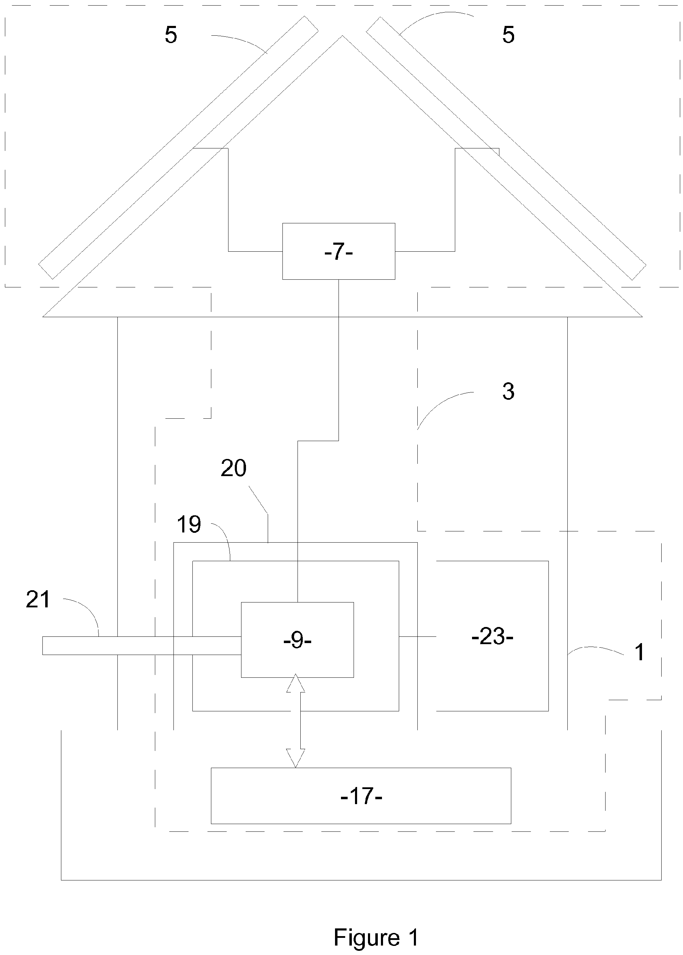

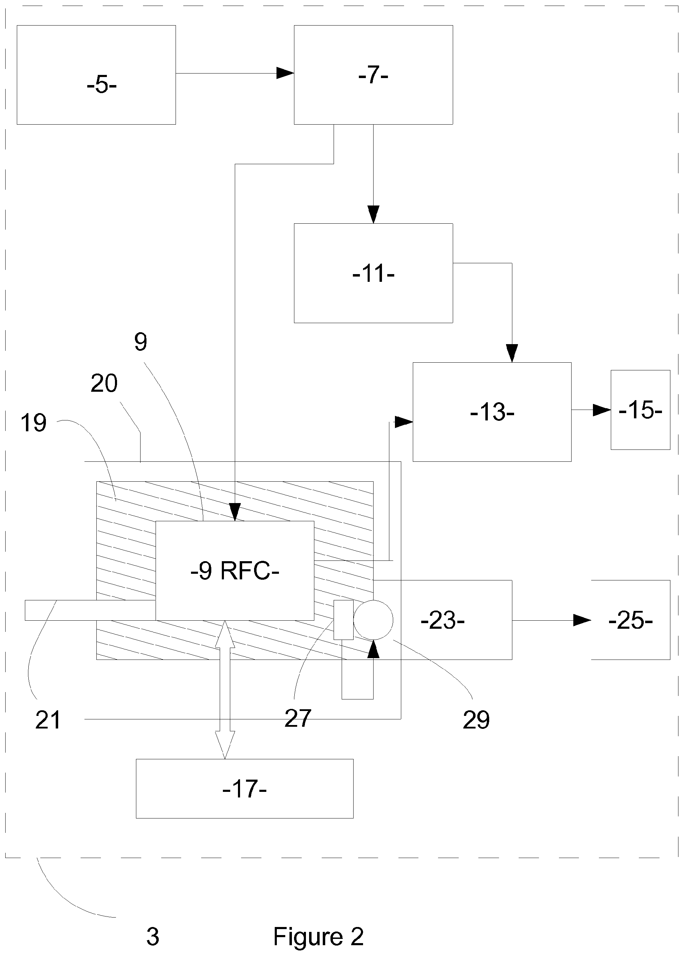

An embodiment of the present invention will be described in relationship with figures 1 and 2.

In figure 1, there is represented a building 1, like a house, building, quarter, farmer which is equipped with a power generation system 3.

The power generation system 3 comprises at least one renewable energy source 5 like solar panels (as represented on figure 1) or electricity generating wind mills (also designated as wind turbine) or any other intermittent renewable energy source.

The renewable energy source 5 is connected to a power converter and switching module 7 like a DC/DC converter or like in order to adapt the electrical energy generated by the renewable energy source 5 to the downstream connected units.

In particular, the power converter and switching module 7 is connected to a reversible fuel cell module 9 on the one hand and optionally (as shown in figure 2) to a battery 11. As shown in figure 2, the battery 11 is coupled to an optional converter 13, for example a DC/AC converter that is coupled to a consumer circuit 15 of the building 1 or to a public grid for export of electricity.

The reversible fuel cell module 9 is a module exhibiting on the one hand a electrolysis functioning mode where the module is powered by the electricity supplied by the renewable energy source for generation of a combustible gas, like for example hydrogen and on the other hand a fuel cell functioning mode where the module generates electricity from a combustible gas like hydrogen.

The reversible fuel cell module 9 may be for example in one embodiment a single reversible solid oxide fuel cell (SOFC) 9RFC, that operates at a high temperature between 500°C and 1000C in both functioning modes.

The reversible fuel cell module 9 is also coupled to a combustible gas storage 17, like a hydrogen storage, for storing the combustible gas generated by the reversible fuel cell module 9 in the electrolysis functioning mode and for supplying the combustible gas to the reversible fuel cell module in the fuel cell function mode. In addition, the oxygen produced by electrolysis may also be captured and stored in a separate non-represented storage, for example for re-use during combustion or for separate selling.

Furthermore, the reversible fuel cell module 9 is coupled to a water tank (not represented) in order to supply water for electrolysis and generation of hydrogen in the electrolysis functioning mode.

As shown in figure 2, when functioning in the fuel cell functioning mode where the fuel cell 9 generates electricity, the reversible fuel cell module 9 is also connected to the converter 13, which is coupled to the consumer circuit 15 of the building 1.

In order to better valuate the heat, in particular generated when the reversible fuel cell module 9 is functioning in the fuel cell functioning mode, the power generation system 3 furthermore comprises a high temperature heat storage 19 coupled to said reversible fuel cell module for maintaining the reversible fuel cell module 9 in an operation temperature range in particular in the electrolysis functioning mode.

This is in particular very useful when switching from the fuel cell functioning mode to the electrolysis functioning mode, because the heat generated during the fuel cell functioning mode can be re-used during the electrolysis mode. Thus no or less additional heating is necessary in order to maintain the reversible fuel cell module 9 in an operation temperature range. In addition, less active control is needed to maintain the reversible fuel cell in an operation temperature range.

As an example, the high temperature heat storage 19 comprises a heat exchanger having salts as heat exchange medium that are in a molten state in the operation temperature range of the reversible fuel cell module 9.

One may use Fluorides (LiF), Chlorides (NaCl), Fluoroborates (NaBF4), or mixtures like LiF-BeF2, or LiF-NaF-KF, KCl-MgCl2.

Molten salts have the advantage to be thermodynamically very efficient and to be in a molten state in a wide temperature range. But also other heat transfer fluids at high temperature may be used, for example PCMs (phase change materials).

In order to enhance such a high temperature heat storage 19, the reversible fuel cell module 9 is encapsulated by the high temperature heat storage 19.

Typically, the reversible fuel cell 9RFC has dimensions of 20cm X 20cm. The heat storage 19 may be built as an envelope having a thickness in the range of 40-60cm, in particular 50cm. Around the heat storage 19 is built a first thermal isolation 20 for example made of refractory bricks and/or PCMs (phase change materials). The refractory bricks may show a layer thickness of 40-60cm typically 50cm. In a non-represented alternative, a second thermal isolation for example of mineral wool (glass- or rock- wool) may be envisaged around the first thermal isolation also with a layer thickness of 40-60cm typically 50cm.

In case the temperature of the reversible fuel cell 9RFC is going to be below its operation temperature range in the electrolysis mode or when for example a cloud passes and the renewable energy source 5 does not generate electricity, the power generation system comprises a control unit that allows to switch from the electrolysis functioning mode to the fuel cell functioning mode in a quite short time, for example between 5 and 10min. This allows either to maintain the temperature at an elevated level when switching back to the electrolysis functioning mode.
It is also shown in figures 1 and 2, that the reversible fuel cell module 9 is coupled to a natural gas distribution supply 21. The natural gas may be used to extend autonomy and to heat for example the reversible fuel cell module 9 if its temperature is going to be below its operation temperature range.

For further valuating the generated heat, the power generation system further comprises a secondary heat exchanger 23 coupled on the one side to the high temperature heat storage 19 and on the other side to at least one domestic heat consumer module 25, like a hot water circuit of the building 1 for example through a hot water storage tank. By hot water circuit, it is meant the hot water supply for example for taking a shower but also the hot water for the heating system (floor, radiator, etc.) for heating the rooms of the building 1.

One may therefore understand that the present power generation system exhibits a double level heat valuation, the first level being at high temperature in order to enhance the efficiency of the reversible fuel cell module 9 and a second level for heating the building or to supply hot water in the water supply circuit of the building 1.

Optionally as shown in figure 2, the power generation system 3 comprises furthermore a temperature sensor 27 and a coupling actuator 29 (like a pump or a valve) between the high temperature heat storage 21 and the secondary heat exchanger 23.

The coupling actuator 29 is activated upon a signal from the temperature sensor 27 in order to activate the secondary heat exchanger 23 at a predetermined temperature within or above the operation temperature range of the a reversible fuel cell module 9.

Thus the secondary heat level valuation is only activated if there is heat in excess generated by the reversible fuel cell module 9.

The functioning of the power generating system according to the invention may be as follows:
Let's assume a sunny day in the afternoon when the habitants of the building 1 are still at work or in school and therefore, there are very few consumers connected to the consumer circuit 15.

In this case, the PV panels deliver quite a lot of electrical power. This power may be then stored first in the battery 11 if such a battery is present in the system.

When a predefined load level of the battery 11 has been reached, the power converter and switching module 7 switches for powering the reversible fuel cell module 9 in the electrolysis functioning for producing hydrogen and storing it in the hydrogen storage 17.

Let's assume that the molten salt in the high temperature heat storage is still about 700° C, the reversible fuel cell module 9 can directly start functioning without need of an additional heating.

Thanks to the encapsulation with the high temperature heat storage 19, the operation temperature for the electrolysis mode can be maintained for a long time, typically several hours.

In case the temperature is too low for functioning, for example after functioning in the electrolysis mode for a long time (several hours), the reversible fuel cell module 9 can be heated either in switching back to the fuel cell functioning mode or in heating with the gas in the combustible gas storage 17 or through the supply of natural gas from the natural gas distribution supply 21.

In the evening, when the sun is down, the reversible fuel cell module 9 is switched in the fuel cell functioning mode for supplying electricity to the converter 13, which is coupled to the consumer circuit 15 of the building 1.

In this case, heat generated by the reversible fuel cell module 9 is stored in the high temperature heat storage 19. In case the temperature of the molten salt in the high temperature heat storage reaches for example 750°C measured by the temperature sensor 27, the actuator 29 opens and activates the secondary heat exchanger 23 for heating the building or to supply hot water.

It can be easily understood that the present power generation system does only need one unit for generating electricity or hydrogen together with heat.

In addition, the heat generated in the system is stored and used when necessary, on the fuel cell level or for heating the building.

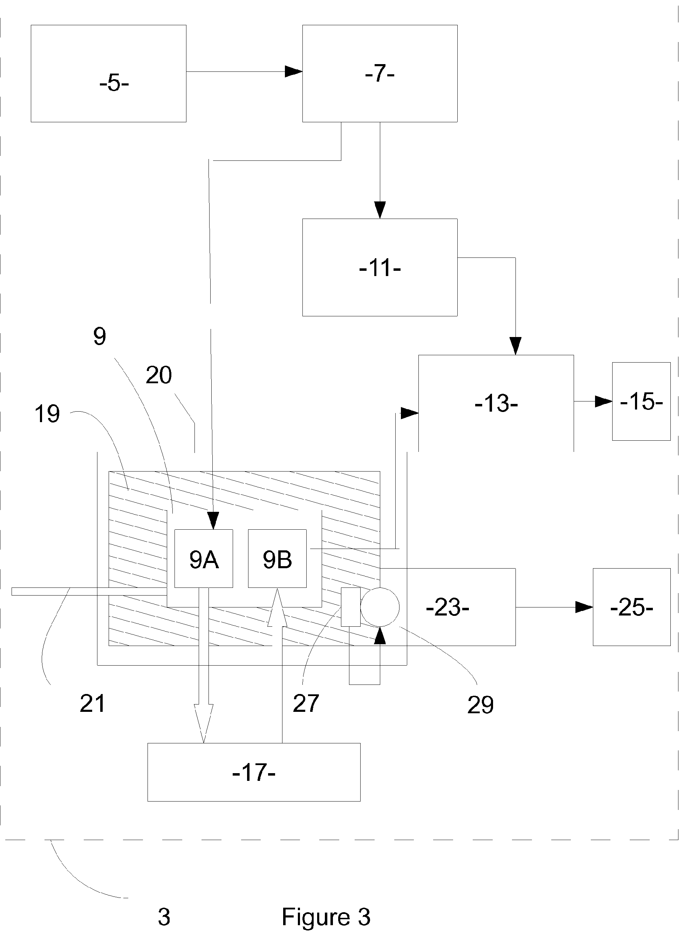

FIG. 3 is a more detailed and structural schematic of a variant of the embodiment of the power generation system of figure 2.

This variant differs from that of figure 2 by the fact that the reversible fuel cell mode 9 is composed of at least two distinct fuel cells 9A and 9B having respectively separate functions and a common heat storage 19 encapsulating both cells 9A and 9B. One fuel cell module 9A is only functioning in the electrolysis functioning mode and supplied by the renewable energy source 3 for generation of a combustible gas and for storing this gas in the combustible gas storage 17. The other fuel cell 9B is only functioning in the fuel cell functioning mode for generating electricity and supplied from the combustible gas storage 17 with combustible gas to produce heat and electricity at a different time of operation, during the night and/or off-period of renewable electricity availability.

Fuel cell 9B could be used to pre-heat the other one 9A through the heat storage 19. One fuel cell 9A is a SOEC (solid oxide electrolysis cell), the other fuel cell 9B is a SOFC (solid oxide fuel cell) or a PEM fuel cell (polymer electrolyte membrane fuel cell).

It can easily be understood the overall energy efficiency of the present power generation system is quite high.

## Claims

1. Power generation system comprising:
- at least one renewable energy source (5),
- a reversible fuel cell module (9) exhibiting a electrolysis functioning mode where the fuel cell module (9) is powered by the renewable energy source (5) for generation of a combustible gas and a fuel cell functioning mode where the fuel cell module (9) generates electricity from a combustible gas,
- a high temperature heat storage (19) coupled to said reversible fuel cell module (9) for maintaining the reversible fuel cell module (9) in a operation temperature range in the electrolysis functioning mode, the high temperature heat storage (19) comprising a heat exchanger having salts as heat exchange medium that are in a molten state in the operation temperature range of the reversible fuel cell module (9)
- a combustible gas storage (17) coupled to the reversible fuel cell module (9) for storing the combustible gas generated by the reversible fuel cell module (9) in the electrolysis functioning mode and for supplying the combustible gas to the reversible fuel cell module (9) in the fuel cell function mode,
wherein the reversible fuel cell module (9) is encapsulated by the high temperature heat storage (19), and a first thermal isolation (20) is built around the high temperature heat storage (19).

2. Power generation system as to claim 1, where said reversible fuel cell module (9) comprises a reversible fuel cell (9RFC).

3. Power generation system as to claim 2, where said reversible fuel cell (9RFC) is a reversible solid oxide fuel cell SOFC.

4. Power generation system as to claim 1, where said reversible fuel cell module (9) comprises at least a first fuel cell (9A) generating a combustible gas and a second fuel cell (9B) generating electricity from a combustible gas.

5. Power generation system as to any of claims 1 to 4, further comprising a secondary heat exchanger (23) coupled on the one side to the high temperature heat storage (19) and on the other side to at least one domestic heat consumer module (25).

6. Power generating system as to claim 5, where domestic heat consumer module (25) comprises the hot water circuit or hot water storage capacities of a building (1).

7. Power generation system as to claim 5 or 6, comprising furthermore a temperature sensor (27) and a coupling actuator (29) between the high temperature heat storage (19) and the secondary heat exchanger (23) which is activated upon a signal from the temperature sensor (27) in order to activate the secondary heat exchanger (23) at a predetermined temperature within or above the operation temperature range of the reversible fuel cell module (9).

8. Power generation system as to any of claims 1 to 7, where the renewable energy source (5) comprises a photovoltaic panel.

9. Power generation system as to any of claims 1 to 8, comprising furthermore a battery (11) for storing electricity produced by the renewable energy source (5) and a switching module (7) for powering the reversible fuel cell module (9) in the electrolysis functioning mode once a predefined load level of the battery (11) has been reached.

10. Power generation system as to any of claims 1 to 9, where the reversible fuel cell module (9) is in addition coupled to a natural gas distribution supply (21).

11. Building (1) comprising a power generation system as to any of claims 1 to 10, where the secondary heat exchanger (23) is coupled to a heating system of the building (1).

## Patentansprüche

1. Energieerzeugungssystem, umfassend:
- mindestens eine erneuerbare Energiequelle (5),
- ein reversibles Brennstoffzellenmodul (9), das einen Elektrolyse-Funktionsmodus, in dem das Brennstoffzellenmodul (9) durch die erneuerbare Energiequelle (5) zur Erzeugung eines brennbaren Gases betrieben wird, und einen Brennstoffzellen-Funktionsmodus, in dem das Brennstoffzellenmodul (9) Elektrizität aus einem brennbaren Gas erzeugt, aufweist,
- einen mit dem reversiblen Brennstoffzellenmodul (9) gekoppelten Hochtemperaturwärmespeicher (19) zum Aufrechterhalten des reversiblen Brennstoffzellenmoduls (9) in einem Betriebstemperaturbereich im Elektrolyse-Funktionsmodus, wobei der Hochtemperaturwärmespeicher (19) einen Wärmetauscher mit Salzen als Wärmetauschermedium umfasst, die sich im Betriebstemperaturbereich des reversiblen Brennstoffzellenmoduls (9) in einem geschmolzenen Zustand befinden,
- einen mit dem reversiblen Brennstoffzellenmodul (9) gekoppelten Speicher für brennbares Gas (17) zum Speichern des vom reversiblen Brennstoffzellenmodul (9) erzeugten brennbaren Gases im Elektrolyse-Funktionsmodus und zum Zuführen des brennbaren Gases zum reversiblen Brennstoffzellenmodul (9) im Brennstoffzellen-Funktionsmodus,
wobei das reversible Brennstoffzellenmodul (9) durch den Hochtemperaturwärmespeicher (19) gekapselt ist und eine erste thermische Isolation (20) um den Hochtemperaturwärmespeicher (19) herum aufgebaut ist.

2. Energieerzeugungssystem nach Anspruch 1, wobei das reversible Brennstoffzellenmodul (9) eine reversible Brennstoffzelle (9RFC) umfasst.

3. Energieerzeugungssystem nach Anspruch 2, wobei die reversible Brennstoffzelle (9RFC) eine reversible Festoxidbrennstoffzelle (SOFC - "Solid Oxide Fuel Cell" auf Englisch) ist.

4. Energieerzeugungssystem nach Anspruch 1, wobei das reversible Brennstoffzellenmodul (9) mindestens eine erste Brennstoffzelle (9A), die ein brennbares Gas erzeugt, und eine zweite Brennstoffzelle (9B), die aus einem brennbaren Gas Elektrizität erzeugt, umfasst.

5. Energieerzeugungssystem nach einem der Ansprüche 1 bis 4, ferner umfassend einen sekundären Wärmetauscher (23), der auf der einen Seite mit dem Hochtemperaturwärmespeicher (19) und auf der anderen Seite mit mindestens einem Hauswärmeverbrauchermodul (25) gekoppelt ist.

6. Energieerzeugungssystem nach Anspruch 5, bei dem das Hauswärmeverbrauchermodul (25) den Warmwasserkreislauf oder Warmwasserspeicherkapazitäten eines Gebäudes (1) umfasst.

7. Energieerzeugungssystem nach Anspruch 5 oder 6, ferner umfassend einen Temperatursensor (27) und ein Kopplungsstellglied (29) zwischen dem Hochtemperaturwärmespeicher (19) und dem sekundären Wärmetauscher (23), das auf ein Signal des Temperatursensors (27) hin aktiviert wird, um den sekundären Wärmetauscher (23) bei einer vorbestimmten Temperatur innerhalb oder oberhalb des Betriebstemperaturbereichs des reversiblen Brennstoffzellenmoduls (9) zu aktivieren.

8. Energieerzeugungssystem nach einem der Ansprüche 1 bis 7, bei dem die erneuerbare Energiequelle (5) eine Photovoltaikplatte umfasst.

9. Energieerzeugungssystem nach einem der Ansprüche 1 bis 8, ferner umfassend einen Akku (11) zum Speichern von durch die erneuerbare Energiequelle (5) erzeugter Elektrizität und ein Schaltmodul (7) zum Versorgen des reversiblen Brennstoffzellenmoduls (9) im Elektrolyse-Funktionsmodus, sobald ein vordefinierter Ladepegel des Akkus (11) erreicht ist.

10. Energieerzeugungssystem nach einem der Ansprüche 1 bis 9, bei dem das reversible Brennstoffzellenmodul (9) zusätzlich mit einer Erdgasverteilungsanlage (21) gekoppelt ist.

11. Gebäude (1) mit einem Energieerzeugungssystem nach einem der Ansprüche 1 bis 10, wobei der sekundäre Wärmetauscher (23) mit einem Heizungssystem des Gebäudes (1) gekoppelt ist.

## Revendications

1. Système de production d'énergie comprenant :
- au moins une source d'énergie renouvelable (5),
- un module à pile à combustible réversible (9) qui possède un mode de fonctionnement en électrolyse dans lequel le module à pile à combustible (9) est alimenté par la source d'énergie renouvelable (5) en vue de générer un gaz combustible et un mode de fonctionnement en pile à combustible dans lequel le module à pile à combustible (9) génère de l'électricité à partir d'un gaz combustible,
- un élément de stockage de chaleur à haute température (19) relié audit module de pile à combustible réversible (9) pour maintenir le module de pile à combustible réversible (9) dans une plage de températures de fonctionnement dans le mode de fonctionnement en électrolyse, l'élément de stockage de chaleur à haute température (19) comprenant un échangeur de chaleur comportant des sels en tant qu'agent échangeur de chaleur qui sont dans un état fondu dans la plage de températures de fonctionnement du module à pile à combustible réversible (9),
- un élément de stockage de gaz combustible (17) relié au module à pile à combustible réversible (9) pour stocker le gaz combustible généré par le module à pile à combustible réversible (9) dans le mode de fonctionnement en électrolyse et pour délivrer le gaz combustible au module à pile à combustible réversible (9) dans le mode de fonctionnement en pile à combustible,
le module à pile à combustible réversible (9) étant encapsulé par l'élément de stockage de chaleur à haute température (19), et une première isolation thermique (20) étant construite autour de l'élément de stockage de chaleur à haute température (19).

2. Système de production d'énergie selon la revendication 1, dans lequel ledit module à pile à combustible réversible (9) comprend une pile à combustible réversible (9RFC).

3. Système de production d'énergie selon la revendication 2, dans lequel ladite pile à combustible réversible (9RFC) est une pile à combustible à oxyde solide réversible ("SOFC - solid oxide fuel cell" en anglais).

4. Système de production d'énergie selon la revendication 1, dans lequel ledit module à pile à combustible réversible (9) comprend au moins une première pile à combustible (9A) générant un gaz combustible et une seconde pile à combustible (9B) générant de l'électricité à partir d'un gaz combustible.

5. Système de production d'énergie selon l'une quelconque des revendications 1 à 4, comprenant en outre un échangeur de chaleur secondaire (23) relié d'un côté à l'élément de stockage de chaleur à haute température (19) et de l'autre côté à au moins un module consommateur de chaleur domestique (25).

6. Système de production d'énergie selon la revendication 5, dans lequel le module consommateur de chaleur domestique (25) comprend le circuit d'eau chaude ou des capacités de stockage d'eau chaude d'un bâtiment (1).

7. Système de production d'énergie selon la revendication 5 ou 6, comprenant en outre un capteur de température (27) et un actionneur de couplage (29) entre l'élément de stockage de chaleur à haute température (19) et l'échangeur de chaleur secondaire (23) qui est activé en fonction d'un signal provenant du capteur de température (27) afin d'activer l'échangeur de chaleur secondaire (23) à une température prédéterminée se situant à l'intérieur ou au-dessus de la plage de températures de fonctionnement du module à pile à combustible réversible (9).

8. Système de production d'énergie selon l'une des revendications 1 à 7, dans lequel la source d'énergie renouvelable (5) comprend un panneau photovoltaique.

9. Système de production d'énergie selon l'une quelconque des revendications 1 à 8, comprenant en outre une batterie (11) pour stocker l'électricité produite par la source d'énergie renouvelable (5) et un module de commutation (7) pour alimenter le module à pile à combustible réversible (9) dans le mode de fonctionnement en électrolyse une fois qu'un niveau de charge prédéfini de la batterie (11) a été atteint.

10. Système de production d'énergie selon l'une des revendications 1 à 9, dans lequel le module à pile à combustible réversible (9) est en outre relié à une alimentation de distribution de gaz naturel (21).

11. Bâtiment (1) comprenant un système de production d'énergie selon l'une des revendications 1 à 10, dans lequel l'échangeur de chaleur secondaire (23) est relié à un système de chauffage du bâtiment (1).
